(19) Europäisches Patentamt
European Patent Office
Office européen des brevets

(11) **EP 1 962 558 A1**

(12) **EUROPEAN PATENT APPLICATION**
published in accordance with Art. 158(3) EPC

(43) Date of publication:
**27.08.2008 Bulletin 2008/35**

(51) Int Cl.:
***H04S 5/02*** (2006.01)

(21) Application number: **06833587.6**

(22) Date of filing: **29.11.2006**

(86) International application number:
**PCT/JP2006/323783**

(87) International publication number:
**WO 2007/063880 (07.06.2007 Gazette 2007/23)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.12.2005 JP 2005349090**

(71) Applicant: **YAMAHA CORPORATION**
**Naka-ku**
**Hamamatsu-shi**
**Shizuoka-ken 430-8650 (JP)**

(72) Inventors:
• **SUZUKI, Satoshi**
**Shizuoka 430-8650 (JP)**
• **ISHIBASHI, Toshiaki**
**Shizuoka 430-8650 (JP)**
• **TANAKA, Ryo**
**Shizuoka 430-8650 (JP)**

(74) Representative: **Klang, Alexander H.**
**Wagner & Geyer**
**Gewürzmühlstrasse 5**
**80538 München (DE)**

(54) **POSITION DETECTION SYSTEM, AUDIO DEVICE AND TERMINAL DEVICE USED IN THE POSITION DETECTION SYSTEM**

(57)     A position detecting system is provided, which is capable of effectively preventing erroneous detection of audio to be measured. The position detecting system includes a terminal device that inputs an audio signal from an audio device and a microphone. The audio device sequentially inputs measurement audio signals that have been formed by two or more audio signals of different frequencies to a speaker and receives a notification signal, wherein the report signal indicates that the audio of the measurement audio signal has been collected from the terminal device. The audio device clocks a time t1 and a time t2, namely clocks after the audio of the measurement audio signal is output from the speakers SP 1 --- SP2 until the notification signals of the measurement audio signals are received by the signal receiving unit. The audio device calculates the position of the microphone by using the times t1 and t2. For each frequency component of the measurement audio signal, when an audio signal exceeding a predetermined level is inputted from the microphone, the terminal device detects it as a component of the measurement audio signal and transmits a notification signal upon detection of the measurement audio signal.

FIG. 3

EP 1 962 558 A1

**Description**

Technical Field:

This invention relates to a position detecting system that measures the listening position by an input timing of an audio to be measured, the audio to be measured has been output from a speaker and input into a microphone, as well as an audio device and a terminal device, both of which are used for this position detecting system.
Priority is claimed on Japanese Patent Application No. 2005-349090, filed December 2, 2005, the content of which is incorporated herein by reference.

Background of the Art:

It has been known a device including a plurality of speakers that output audio at a volume and a delay time which are appropriate to the listening position of a listener, such as an audio device and a speaker array device which output audio through multiple channels. The speaker device adjusts the output level of the audio signal and is given a delay time, in accordance with the listening position of a listener. The output level of the audio signal is adjusted so that audios that have output from the plurality of speakers reach the listening position, while the audios have the same volume at the listening position.
In order to calculate the delay time and the volume of the audio, it is necessary that the speaker device previously acquired the listening position. Patent Document 1 proposes an audio device that automatically detects the listening position. This audio device has two speakers for L-channel and R-channel and a microphone. The microphone is previously disposed at the listening position. Then, the audio device generates an audio signal to be measured so that the audio signal is input into the two speakers sequentially.
An audio (measurement audio) of this measurement audio signal is collected by the microphone. The audio device calculates a time t10 until the measurement audio reaches the microphone after the measurement audio signal to be input into the L-channel speaker is generated. Similarly, the audio device calculates a time t20 until the measurement audio reaches the microphone after the measurement audio signal to be input into the R-channel speaker is generated.
The audio device calculates, by using the time t10, a distance from the L-channel speaker to the microphone. The audio device calculates, by using the time t20, a distance from the R-channel speaker to the microphone. Thus, the listening position is calculated. The audio device can acquire the listening position and calculate the delay time and the output level in accordance with the listening position.

Patent Document: Japanese Unexamined Patent Application, First Publication, No. 4-370000.

Disclosure:

Issues to be solved by the invention:

The above-described conventional audio device uses an impulse for measurement audio. Thus, the conventional audio device may make false detection that noises such as environmental sounds having been input through a microphone and music having been output from a speaker would be measurement audio. The noise or music may include components that are similar to the impulse. The conventional audio device may make false detection of the noises or music as the impulse.
It is desired to separate only components of the measurement audio from the audio signal as input through a microphone. It is actually difficult to separate only components of the measurement audio due to wide frequency spectrum of the impulse. Such false detection leads to inaccurate measurement results.
Accordingly, it is an object of the present invention to provide a deposition detecting system that effectively prevents false detection of measurement audio.
It is another object of the present invention to provide an audio device and a terminal device, each of which is used for a position detecting system that effectively prevents false detection of measurement audio.

Issues to be solved by the Invention

In accordance with a first aspect of the present invention, a position detecting system includes at least an audio device, and a terminal device that performs a function to communicate with the audio device. The terminal device receives an input of an audio signal from a microphone. The microphone collects audios that have been output from the audio device. The audio device includes at least an input unit, a signal receiver, a timer, and an operating unit. The input unit inputs a measurement audio signal that includes two or more audio signals having different frequencies into first and second speakers sequentially. The signal receiver receives, from the terminal device, a notification signal notifying that the microphone collected the audio of the measurement audio signal. The timer times a first time period and a second time period. The first time period is defined between after the audio of the measurement audio signal is output from the first speaker and until the notification signal of the measurement audio signal is received by the signal receiving unit. The second time period being defined between after the audio of the measurement audio signal is output from the second speaker and until the notification signal of the measurement audio signal is received by the signal receiving unit. The operating unit operates the position of the microphone by using the first and second time periods that have been timed by the timer unit.

The terminal device includes at least a signal detector and a signal transmitter. The signal detector detects each frequency component of the measurement audio signal as a component of the measurement audio signal when the audio signal having a higher level than a predetermined level is input through the microphone. The signal transmitter transmits the notification signal to the audio device when the signal detector detects the measurement audio signal.

In accordance with the above-described position detecting system, the input unit inputs, into the speakers, a signal of harmony as the measurement audio signal.

In accordance with a second aspect of the present invention, an audio device includes at least an input unit, a signal receiver, a timer, and a position measuring unit. The input unit inputs a measurement audio signal that includes two or more audio signals having different frequencies into first and second speakers sequentially. The signal receiver receives a communication signal from a terminal device having a microphone. The signal receiver receives a notification signal notifying that the microphone collected the audio of the measurement audio signal. The timer times a first time period and a second time period. The first time period is defined between after the audio of the measurement audio signal is output from the first speaker and until the notification signal of the measurement audio signal is received by the signal receiving unit. The second time period is defined between after the audio of the measurement audio signal is output from the second speaker and until the notification signal of the measurement audio signal is received by the signal receiving unit. The position measuring unit measures the position of the microphone by using the first and second time periods that have been timed by the timer unit.

In accordance with a third aspect of the present invention, a terminal device performs a function to communicate with an audio device that inputs an audio signal into first and second speakers. The terminal device includes at least an audio signal input unit, a signal detector, and a signal transmitter. The audio signal input unit receives an input of an audio signal through a microphone. The signal detector detects each frequency component of the measurement audio signal as a component of the measurement audio signal when the audio signal having a higher level than a predetermined level is input through the microphone. The each frequency component of the measurement audio signal corresponds to a measurement audio signal that includes two or more audio signals having different frequencies, which has been output from the speakers. The signal transmitter transmits the notification signal to the audio device when the signal detector detects the measurement audio signal.

In accordance with the first to third aspects of the present invention, the input unit in the audio device inputs a measurement audio signal that includes two or more audio signals having different frequencies into first and second speakers sequentially.

In the terminal device, the audio signal input unit receives an input of an audio signal through a microphone. The microphone collects audios that have been output from the audio device. The signal detector detects each frequency component of the measurement audio signal as a component of the measurement audio signal when the audio signal having a higher level than a predetermined level is input through the microphone. The signal transmitter transmits the notification signal to the audio device when the signal detector detects the measurement audio signal.

In the audio device, the signal receiver receives, from the terminal device, a notification signal notifying that the microphone collected the audio of the measurement audio signal. The timer times a first time period and a second time period. The first time period is defined between after the audio of the measurement audio signal is output from the first speaker and until the notification signal of the measurement audio signal is received by the signal receiving unit. The second time period being defined between after the audio of the measurement audio signal is output from the second speaker and until the notification signal of the measurement audio signal is received by the signal receiving unit.

The operating unit operates the position of the microphone by using the first and second time periods that have been timed by the timer unit.

In accordance with the present invention as described above, an input signal is detected as a component of the measurement audio signal when a measurement audio signal that includes two or more audio signals having different frequencies is input into first and second speakers sequentially, and when the audio signal having a higher level than a predetermined level is input through the microphone. Use of the measurement audio signal including the two or more audio signals having different frequencies makes it easier to decide whether the measurement audio is the audio to be measured or the noise than using the measurement audio signal including a single audio signal. This can prevent any false detection that the noises such as the environmental sounds or music are erroneously detected as the audio to be measured.

The input unit inputs the harmonic signal as the measurement audio signal into the speaker, so as to speak the measurement audio which may be not unpleasant sound.

In accordance with a fourth aspect of the present invention, a position detecting system includes at least an audio device, and a terminal device that performs a function to communicate with the audio device. The terminal device receives an input of an audio signal from a microphone, the microphone collecting audios that have been output from the audio device. The audio device includes at least an input unit, a signal receiver, a timer, and an operating unit. The input unit inputs a measurement audio signal that includes a pulse train of a specific pattern into first and second speakers sequentially.

The signal receiver receives, from the terminal device, a notification signal notifying that the microphone collected the audio of the measurement audio signal. The timer times a first time period and a second time period. The first time period is defined between after the audio of the measurement audio signal is output from the first speaker and until the notification signal of the measurement audio signal is received by the signal receiving unit. The second time period being defined between after the audio of the measurement audio signal is output from the second speaker and until the notification signal of the measurement audio signal is received by the signal receiving unit. The operating unit operates the position of the microphone by using the first and second time periods that have been timed by the timer unit.

The terminal device includes at least a signal detector, and a signal transmitter. The signal detector detects an audio signal as a component of the measurement audio signal when the audio signal having a higher level than a predetermined level to match the specific pattern is input through the microphone. The signal transmitter transmits the notification signal to the audio device when the signal detector detects the measurement audio signal.

In accordance with the above-described position detecting system, the input unit inputs the measurement audio signal that includes two or more audio signals having different frequencies into first and second speakers sequentially. The signal detector detects each frequency component of the measurement audio signal as a component of the measurement audio signal when the audio signal input unit receives the input of the audio signal having the higher level than the predetermined level to match the specific pattern.

In accordance with a fifth aspect of the present invention, an audio device includes at least an input unit, a signal receiver, a timer, and a position measuring unit. The input unit inputs a measurement audio signal that includes a pulse train of a specific pattern into first and second speakers sequentially. The signal receiver receives a communication signal from a terminal device having a microphone. The signal receiver receives a notification signal notifying that the microphone collected the audio of the measurement audio signal. The timer times a first time period and a second time period. The first time period is defined between after the audio of the measurement audio signal is output from the first speaker and until the notification signal of the measurement audio signal is received by the signal receiving unit. The second time period is defined between after the audio of the measurement audio signal is output from the second speaker and until the notification signal of the measurement audio signal is received by the signal receiving unit. The position measuring unit measures the position of the microphone by using the first and second time periods that have been timed by the timer unit.

In accordance with a sixth aspect of the present invention, a terminal device performs a function to communicate with an audio device that inputs an audio signal into first and second speakers. The terminal device includes at least an audio signal input unit, a signal detector, and a signal transmitter. The audio signal input unit receives an input of an audio signal through a microphone. The signal detector detects an audio signal as a component of the measurement audio signal when the audio signal input unit receives an input of the audio signal having a higher level than a predetermined level, wherein the audio signal has the same pattern as a specific pattern of a pulse train that has been output from a speaker as the measurement audio signal. The signal transmitter transmits the notification signal to the audio device when the signal detector detects the measurement audio signal.

In accordance with the above-described configuration, the input unit in the audio device inputs a measurement audio signal that includes a pulse train of a specific pattern into first and second speakers sequentially.

In the terminal device, the audio signal input unit receives an input of an audio signal through a microphone. The microphone collects audios that have been output from the audio device. The signal detector detects an audio signal as a component of the measurement audio signal when the audio signal having a higher level than a predetermined level to match the specific pattern is input through the microphone. The signal transmitter transmits the notification signal to the audio device when the signal detector detects the measurement audio signal.

In the audio device, the signal receiver receives, from the terminal device, a notification signal notifying that the microphone collected the audio of the measurement audio signal. The timer times a first time period and a second time period. The first time period is defined between after the audio of the measurement audio signal is output from the first speaker and until the notification signal of the measurement audio signal is received by the signal receiving unit. The second time period being defined between after the audio of the measurement audio signal is output from the second speaker and until the notification signal of the measurement audio signal is received by the signal receiving unit.

The operating unit operates the position of the microphone by using the first and second time periods that have been timed by the timer unit.

In accordance with the present invention as described above, an input signal is detected as a component of the measurement audio signal when a measurement audio signal that includes a pulse train of a specific pattern is input into first and second speakers sequentially, and when the audio signal having a higher level than a predetermined level to match the specific pattern is input through the audio signal input unit. Use of the measurement audio signal including a pulse train of a specific pattern makes it easier to decide whether the measurement audio is the audio to be measured or the noise. This can prevent any false detection that the noises such as the environmental sounds or music are erroneously detected as the audio to be measured.

In accordance with the present invention as described above, pulse trains of two or more audio signals having different frequencies as the measurement audio signal are input into the first and second speakers sequentially. The input signal is detected as a component of the measurement audio signal when the input unit inputs the audio signal having a higher level than a predetermined level to match the specific pattern for each frequency component of the measurement audio signal. This can prevent any false detection of the measurement audio.

Effect of the Invention:

In accordance with an aspect of the present invention, an input signal is detected as a component of the measurement audio signal when a measurement audio signal that includes two or more audio signals having different frequencies is input into first and second speakers sequentially, and when the audio signal having a higher level than a predetermined level is input through the microphone for each frequency component of the measurement audio signal. Use of the measurement audio signal including the two or more audio signals having different frequencies makes it easier to decide whether the measurement audio is the audio to be measured or the noise than using the measurement audio signal including a single audio signal. This can prevent any false detection that the noises such as the environmental sounds or music are erroneously detected as the audio to be measured.

In accordance with another the present invention as described above, an input signal is detected as a component of the measurement audio signal when a measurement audio signal that includes a pulse train of a specific pattern is input into first and second speakers sequentially, and when the audio signal having a higher level than a predetermined level to match the specific pattern is input through the audio signal input unit. Use of the measurement audio signal including a pulse train of a specific pattern makes it easier to decide whether the measurement audio is the audio to be measured or the noise. This can prevent any false detection that the noises such as the environmental sounds or music are erroneously detected as the audio to be measured.

Brief Descriptions of the Drawings:

FIG. 1 is a schematic view illustrating an audio system in accordance with a first embodiment of the present invention.
FIG. 2 is a view illustrating the position detecting process that is executed by the position detecting system of FIG. 1.
FIG. 3 is a block diagram schematically illustrating the configuration of the audio system shown in FIG. 1.
FIG. 4 is a block diagram illustrating a signal detecting unit and its peripheral configuration shown in FIG. 3.
FIG. 5A is a view illustrating an example of a frequency spectrum of an audio signal inputted from a microphone shown in FIG 3.
FIG. 5B is a view illustrating another example of a frequency spectrum of an audio signal inputted from a microphone shown in FIG. 3.
FIG 6 is a flow chart illustrating a part of the processes that include the position detecting process to be executed by the audio system shown in FIGS. 3 and 4.
FIG. 7 is a flow chart illustrating a part of the processes that include the position detecting process to be executed by the audio system shown in FIGS. 3 and 4.
FIG. 8A is a block diagram illustrating the configuration of a signal detecting unit in an audio system in accordance with a second embodiment of the present invention.
FIG. 8B is a block diagram illustrating an example of timings of signals "a" and "b" input into a decision unit shown in FIG. 8A.
FIG. 9 is a block diagram illustrating the configuration of a signal detecting unit in an audio system in accordance with the second embodiment of the present invention. Descriptions of Reference Numbers:

1 - audio system (position detecting system)
2 - speaker device (audio device)

SP1, SPn - speaker units (first and second speakers)

3a - microphone

3 - remote controller (terminal device)

22 - signal processor (input unit)

24 - infrared receiver (signal receiver)

261 - timer unit

263 - operating unit

31 - infrared emitter (signal transmitter)

34, 34A, 34B - signal detecting unit (audio signal input unit)

f1 - frequency

f2 - frequency

Best Mode for carrying out the Invention

(First Embodiment)

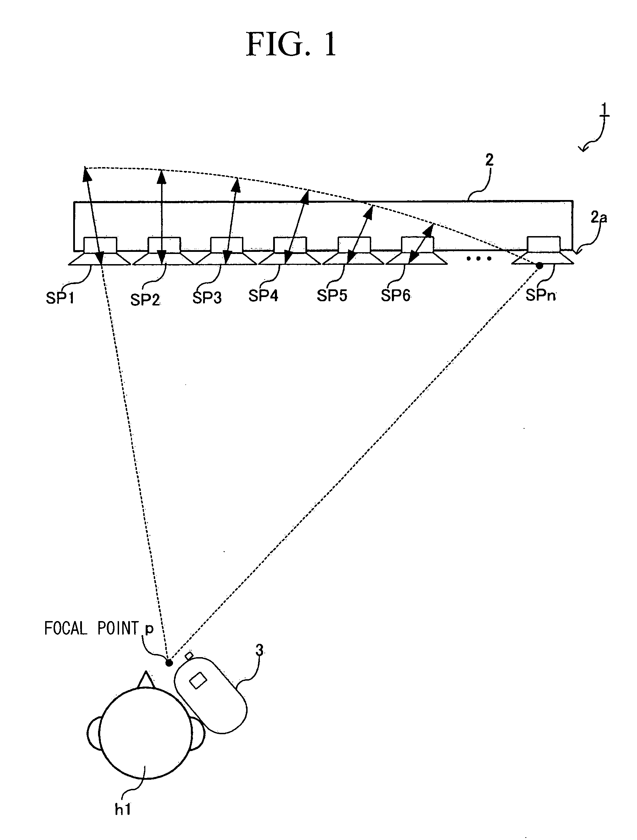

With reference to FIGS. 1-7, descriptions will be made of an audio system 1 in accordance with the first embodiment of the present invention. FIG. 1 is a schematic view illustrating the audio (position detecting) system 1 in accordance with the first embodiment. This schematic view is a plain view of the audio system 1 from its top. The audio system 1 includes a speaker device 2 and a remote controller 3 having a function to operate the speaker device 2. The speaker device 2 has a speaker array 2a of speaker units SP that are aligned in the form of a line. Each audio signal to be input into the speaker unit SP is given a delay time that is represented by an arrow mark of FIG. 1 so that the speaker array 2a outputs an audio beam in a predetermined audio beam direction and a predetermined audio beam range.

Namely, respective audio signals are given by such delay times that audios as output from respective speaker units SP reach a focal point "p" concurrently. An audio beam as a synthesis of audios from the respective speaker units SP (SP1 - SPn) emits toward the focal point "p". When a listening position at which a listener listens the audio from the speaker device 2 is located at this focal point "p", the audio beam reaches just the listening position of a listener. Only a specific listener who is positioned at the listening position can listen the audio.

As described above, the speaker device 2 is previously given delay times for respective audio signals in accordance with respective distances from the listening position of the listener to respective speaker units SP, in order to allow only the specific listener to listen the audio (audio contents) from the speaker device 2.

In order to set the delay times, a process (position detecting process) is executed for detecting the listening position by measuring the distances from the listening position of the speaker device 2 to the speaker units SP (SP1, SPn) which are positioned at opposing ends of the speaker device 2. The speaker device 2 calculates delay times such that respective audios form respective speaker units SP reach the listening position concurrently. The speaker device 2 sets the calculated delay times to be given to the audio signals.

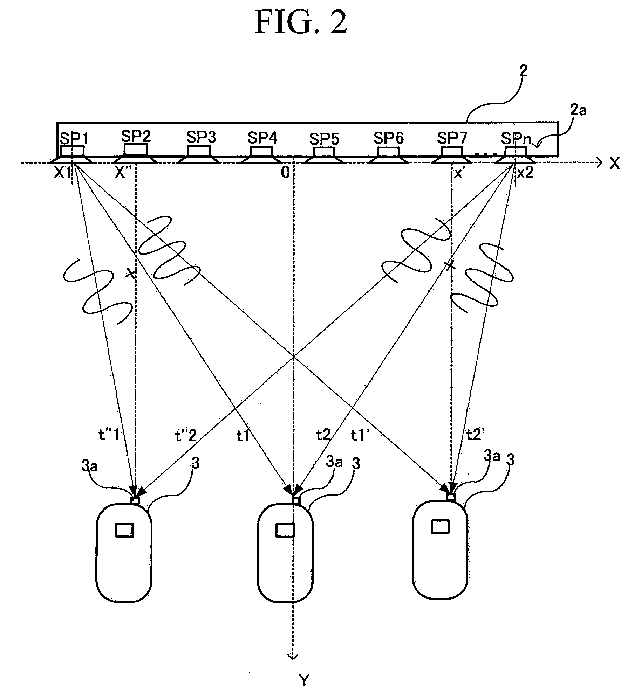

FIG. 2 is a view illustrating the position detecting process that is executed by the position detecting system 1 of FIG. 1. Previously, a remote controller 3 is disposed at the listening position by a listener. The remote controller 3 has a microphone 3. The speaker device 2 and the remote controller 3 each have a communication function. Then, the speaker device 2 operates the speaker units SP to output measurement audios in the order from the speaker units SP1, SPn at the opposing ends of the speaker device 2. The remote controller 3 transmits, to the speaker device 2, a notification signal to notify that the measurement audio is input through the microphone 3a.

The speaker device 2 calculates a time period t1 (first time period) after the speaker unit SP1 outputs the measurement audio until the speaker unit SP1 receives the notification signal. The speaker device 2 also calculates a time period t2 (second time period) after the speaker unit SPn outputs the measurement audio until the speaker unit SPn receives the notification signal. The speaker device 2 calculates the listening position by using the time periods t1 and t2. The process for calculating the listening position will be described in detail later.

In accordance with the present invention, the measurement audio signal is a signal that is created by add-synthesis of two audio signals having different frequencies. For each frequency (frequency f1, frequency f2) of the measurement audio signal, the remote controller 3 detects an input signal as the measurement audio and transmits the notification signal to the speaker device 2 when the input signal having a higher level than a predetermined level is input through the microphone 3a.

Use of the measurement audio signal including the two or more audio signals having different frequencies makes it easier that the remote controller 3 decides whether the measurement audio is the audio to be measured or the noise than when using the measurement audio signal including a single audio signal. This can prevent any false detection that the noises such as the environmental sounds or music spoken by the speaker device 2 are erroneously detected as the audio to be measured, resulting in the improvement in the accuracy in measurement at the listening position.

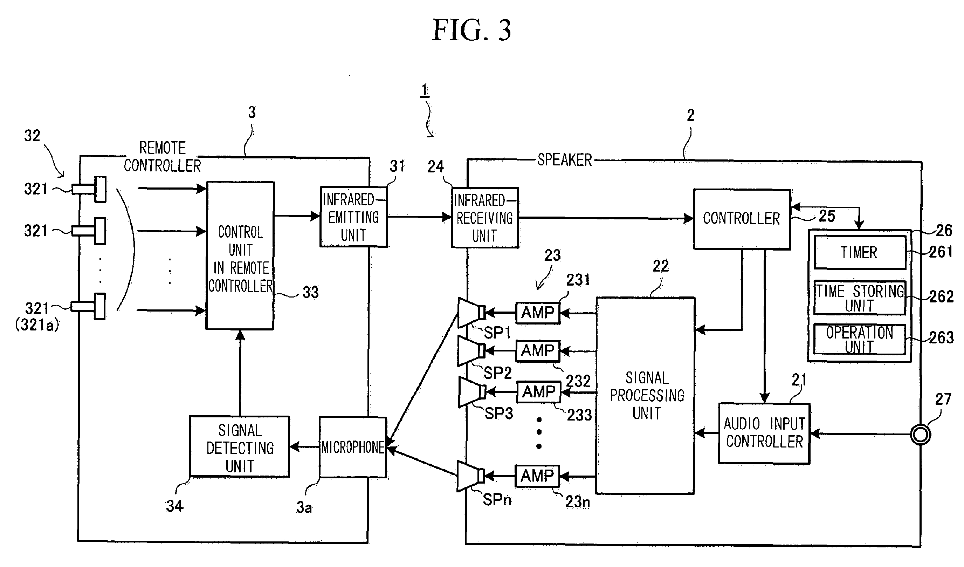

The configuration of the audio system 1 having the function to measure the listening position will be described hereinafter. FIG. 3 is a block diagram schematically illustrating the configuration of the audio system 1. The speaker device 2 has, in addition to the above-described speaker array 2a, an audio input controller 21, a signal processor 22, an amplifier 23, an infrared receiver 24, a controller 25, and a position detector 26.

The audio input control unit 21 is an interface circuit that receives an input of a digital audio signal (audio contents) through an input terminal 27 from an audio player that is connected to the input terminal 27. The audio input control unit 21 inputs the received audio signal into the signal processor 22.

The signal processor 22 can be realized by digital signal processors. The signal processor 22 performs a predetermined audio signal processing such as equalizing to the audio signal. The signal processor 22 divides the audio signal into the same number of divided audio signals as the number of speaker units SP.

In the signal processor 22, a variety of parameters (delay control value, level control value) for adjusting the audio signal is set by the controller 25. In accordance with the parameters, the signal processor 22 adjusts the output level of the divided audio signal and gives the delay time to the divided audio signal. The audio signal is given the delay time in order to direct the audio beam toward the listening position as described with reference to FIG. 1. The delay time has previously been set before the audio contents that the listener wishes will be replayed.

The signal processor 22 inputs the processed audio signal to a corresponding unit of the amplifier 23. The amplifier 23 includes a plurality of amplifier units 231, 232, --- 23n which correspond to the speaker units SP1, SP2, ---, SPn, respectively. The amplifier units 231, 232, --- 23n corresponding to the speaker units SP1, SP2, ---, SPn are distinctively represented.

The amplifier units 231, 232, --- 23n amplify the output levels of the audio signals in accordance with the instructions of the signal processor 22. The amplifier units 231, 232, --- 23n input the amplified audio signals into the speaker units SP1, - - SPn. The speaker units SP1, - - SPn speak the audios which will be synthesized to form an audio beam which will then propagate toward the listening position.

The infrared receiver 24 has an infrared receiving device 24. The infrared receiver 24 receives command signals of infrared ray from the remote controller 3. The infrared receiver 24 converts the received command signal into an electric signal. The infrared receiver 24 inputs the converted electrical signal into the controller 25.

The controller 25 can be realized by CPU (Central Processing Unit) or memory. The controller 25 executes a program that is stored in the memory to control the operations of each element of the speaker device 2. The controller 25 sets the parameters in the signal processor 22. The parameters may include delay control values and the level control value. The delay control value is to control the delay that is given to the audio signal. The level control value is to control the output level of the audio signal. The controller 25 controls the audio signal processing of the signal processor 22.

The controller 25 executes the program that is stored in the memory so that the controller 25 performs the processing in accordance with the command signals that have been input from the infrared receiver 24. The command signals may include, but are not limited to, a replay command to replay the audio signal from the non-illustrated audio player connected to the input terminal 27, and a start command to instruct the speaker device 2 to perform the position detecting process as described above.

Upon input of the start command, the controller 25 executes the position detecting processes in the speaker device. The position detecting process in the speaker side is that the controller 25 controls the signal processor 22 to generate the measurement audio signal and send it to the speaker units SP1, SPn. As described above, the measurement audio signal is a signal that is created by add-synthesis of an audio signal having a frequency f1 and another audio signal having a frequency f2.

In the position detecting process in the speaker side, the controller 25 controls the position detector 26 to measure time periods t1 and t2, which are times from the input of the measurement audio signal into the speaker units SP1 and SPn to the input of the notification signal. For example, the time of sending the signal processor 22 the instructions to generate the measurement audio signals which are to be supplied to the speaker units SP1, SPn is deemed to be the time of inputting the measurement audio signals. The position detector 26 is used to measure the time period from that time to the time when the infrared receiver 24 receives the notification signal. The position detector 26 is used to calculate the listening position by using the measured time periods for the time periods t1 and t2.

In the calculation of the listening position, the time periods t1 and t2 are dealt with as the times from the outputs of the measurement audios from the speaker units SP1, SP2 to the input thereof into the microphone 3a. In this embodiment, other times are ignored as being much shorter than the propagation times of the measurement audios, wherein the other times are, for example, a time from generating the measurement audio signals to the input thereof into the speaker units SP1, SPn, a time for detecting the measurement audios from the audio signals that have been input through the microphone 3 a in the remote controller 3, a time for generating the notification signal, and a time for transmitting and receiving the notification signal. When those times are not so short as being difficult to be ignore, it may of course be possible to correct or compensate those time.

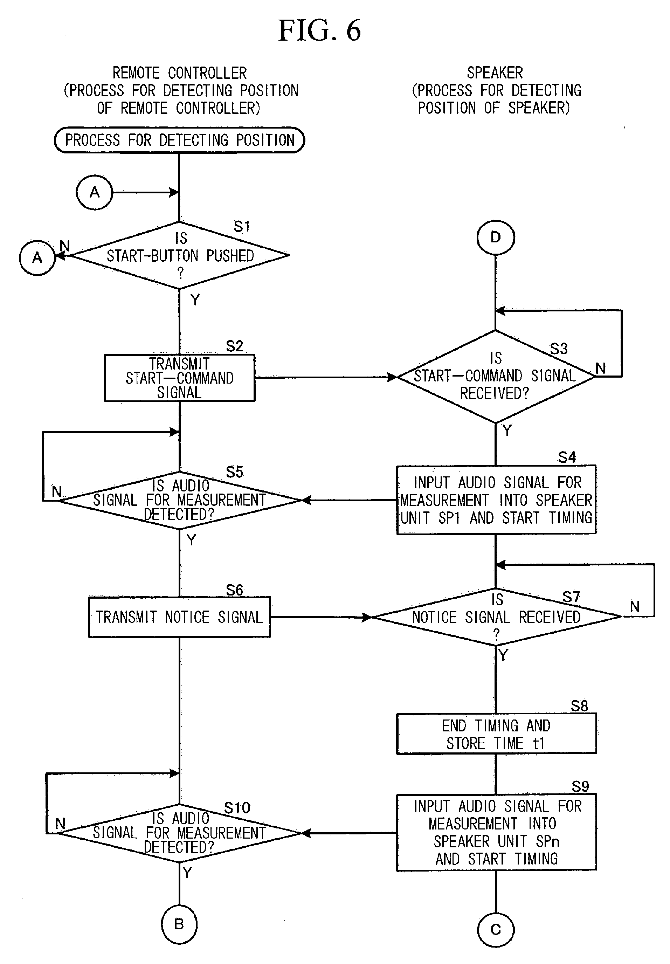

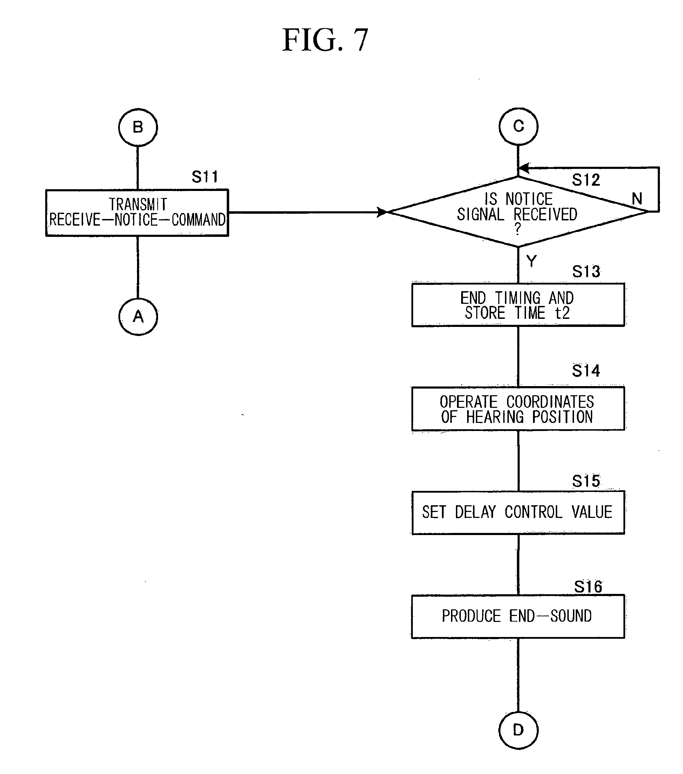

The controller 25 sets parameters in the signal processor 22 in accordance with the listening position that has been acquired by the position detecting process in the speaker side. Namely, the delay control value is set in the signal processor 22 so as to provide the delays shown in the arrow marks in FIG. 1, resulting in the audio beam being directed toward the listening position. The audio beam is directed to the listening position. The position detecting process in the speaker side will be described later with reference to FIGS. 6 and 7.

The position detector 26 can be realized by CPU (Central Processing Unit) and memory such as ROM or RAM. The position detector 26 and the controller 25 can be realized by the common CPU and memory. The position detector 26 executes the program stored in the ROM so that the position detector 26 performs measurement of the time periods t1 and t2 upon instructions by the controller 25 as well as performs calculations of the listening position using the time periods t1 and t2.

The position detector 26 includes a timer 261, a time storing unit 262 and an operation unit 263, for performing the processes. The timer 261 starts to the measurement of a time and ends it in accordance with the instructions by the controller 25. The time storing unit 262 stores the time periods t1 and t2 that have been measured by the timer 261 as well as furnishes an operational area for the operation unit 263. The operation unit 263 calculates the listening position using the time periods t1 and t2 that are stored in the time storing unit 262. A method of calculating the listening position will hereinafter be described with reference to FIG. 2.

For convenience of the explanations, the speaker units SP are aligned in the direction parallel to the X-axis and the Y-axis is horizontal and perpendicular to the X-axis. The right side of the alignment of the speaker units SP, namely the speaker unit SPn is the positive side of the X-axis. The audios output from the speaker units SP toward the positive direction of the Y-axis. Namely, a user is positioned in the positive side of the Y-axis. The crossing point of the X-axis and the Y-axis is positioned at the center of the alignment of the speaker units SP1,---- SPn.

When the time periods t1 and t2 are equal to each other, this means that the distance between the remote controller 3 and the speaker unit SP1 is equal to the distance between the remote controller 3 and the speaker unit SPn. Thus, the remote controller 3 is positioned on the Y-axis, namely in front of the center position of the speaker device 2 (center remote controller position in FIG 2). The operation unit 263 calculates a distance "y" between the remote controller 3 and the speaker device 2 in accordance with the following equation (1), using the time period t1 or t2, the acoustic velocity "c", and a distance (X1 - X2) between the speaker units SP 1 and SPn, provided that the speaker unit SP1 is positioned at the coordinate x1 of the X-axis, and the speaker unit SPn is positioned at the coordinate x2 of the X-axis.

$$y = [ (ct1)^2 - \{ (x2 - x1) / 2 \}^2 ]^{1/2}$$
$$= [ (ct2)^2 - \{ (x2 - x1) / 2 \}^2 ]^{1/2} \cdot \cdot \cdot \text{Equation (1)}$$

If the time period t1 is longer than the time period t2, this means that the distance between the remote controller 3 and the speaker unit SP1 is longer than the distance between the remote controller 3 and the speaker unit SPn. Thus, the remote controller 3 is positioned in the right side of the Y-axis, namely closer to the right side of the speaker device 2 rather than the left side thereof. In this case, the operation unit 263 calculates the coordinate x' on the X-axis, and the coordinate y' on the Y-axis of the remote controller 3 in accordance with the following equations (2) and (3).

$$x' = [ (ct1')^2 - (ct2')^2 + (x2)^2 - (x1)^2 ] / [ 2 (x2 - x1) ] \cdot \cdot \cdot \text{equation (2)}$$
$$y' = [ (ct2')^2 - (x2 - x')^2 ]^{1/2}$$
$$= [ (ct1')^2 - (x' - x1)^2 ]^{1/2} \cdot \cdot \cdot \text{equation (3)}$$

If the time period t1 is shorter than the time period t2, this means that the distance between the remote controller 3 and the speaker unit SP 1 is shorter than the distance between the remote controller 3 and the speaker unit SPn. Thus, the remote controller 3 is positioned in the left side of the Y-axis, namely closer to the left side of the speaker device 2 rather than the right side thereof. In this case, the operation unit 263 calculates the coordinate x' on the X-axis, and the coordinate y' on the Y-axis of the remote controller 3 in accordance with the following equations (4) and (5).

$$x'' = [(ct1'')^2 - (ct2'')^2 + (x2)^2 - (x1)^2] / [2(x2 - x1)] \cdots \text{equation (4)}$$

$$y'' = [(ct2'')^2 - (x2 - x'')^2]^{1/2}$$
$$= [(ct1'')^2 - (x'' - x1)^2]^{1/2} \cdots \text{equation (5)}$$

The configurations of the remote controller 3 will be described. The remote controller 3 includes an infrared emitter 31, a manipulation unit 32, a remote control unit 33 and a signal detector 34, in addition to the microphone. The infrared emitter 31 has an infrared emitting device and emits a command signal of infrared ray in accordance with the input command codes. The manipulation unit 32 has a plurality of manipulation buttons 321. Pushing the manipulation buttons 321 by a listener enters manipulations by the listener. The manipulation unit 32 enters the manipulation signal into the remote control unit 33, wherein the manipulation signal represents the manipulation buttons as pushed.

The remote control unit 33 can be realized by microcomputers. The remote control unit 33 controls the operations of each element of the remote controller 3. The remote control unit 33 stores command codes corresponding to the manipulation buttons 321. Upon input of the manipulation signal, the remote control unit 33 specifies the command code which corresponds to the manipulation button designated by the manipulation signal and then enters the specified command code into the infrared emitter 31.

If the manipulation button 321 (start button 321a) for measuring the listening position is pushed down and the manipulation signal representing it is entered, then the remote control unit 33 enters, into the infrared emitter 31, the command code that the speaker device 2 executes the position detecting process in the speaker side. This command code as the start command signal is output from the infrared emitter 31.

The remote control unit 33 executes the programs as stored so as to perform the position detecting process in the speaker side. As described above, in the speaker device 2, the speaker units SP1, SPn output the measurement audios. In the position detecting process in the speaker side, the notification signal for notifying this notice is generated when the measurement audio is detected at the microphone 3 a namely when the detection of the measurement audio is noticed from the signal detector 34. The remote control unit 33 transmits the generated notification signal through the infrared emitter 31. The position detecting process in the speaker side will be described later.

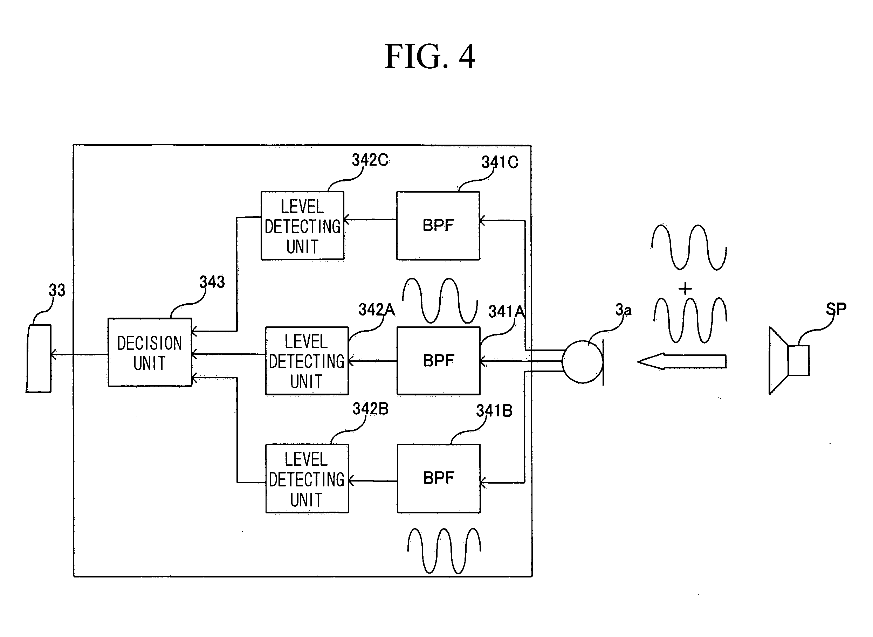

The signal detector 34 receives the input of the audio signal that has been collected by the microphone 3a. The signal detector 34 detects the measurement audio component from the input audio signal. When the signal detector 34 detects the measurement audio component, the signal detector 34 notifies the remote control unit 33 of this detection. The configurations of the signal detector 34 will hereinafter be described with reference to FIG. 4.

FIG. 4 is a block diagram illustrating the configurations of the signal detector 34 and its peripheral devices. The signal detector 34 includes three band-pass filters 341 (341A- 341C), three level detectors 341 (342A- 342C), and a decision unit 343. The band-pass filters 341 receive the inputs of the audio signals from the microphone 3a. The band-pass filter 341Ahas a frequency f1 so as to pass only the component of frequency f1 of the audio signal from the microphone 3a. The component of frequency f1 is then input into the level detector 342A.

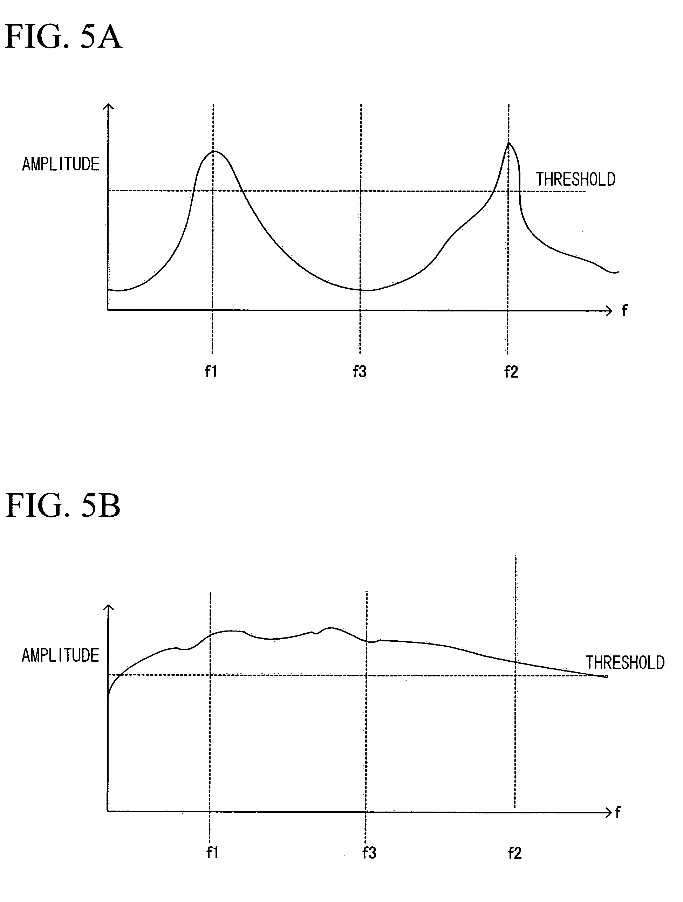

The band-pass filter 341B has a frequency f2 so as to pass only the component of frequency f2 of the audio signal from the microphone 3a. The component of frequency f2 is then input into the level detector 342B. The band-pass filter 341C has a frequency f3 which is between the frequencies f1 and f2 as shown in FIG. 5A, so as to pass only the component of frequency f3 of the audio signal from the microphone 3a.

The level detectors 342A- 342C have a threshold. The level detectors 342A-342C each send the signal to the decision unit 343 when the signal level of the input audio signal is greater than the threshold. Namely, when the level of the component of the audio signal having the frequency f1 exceeds the threshold, the level detector 342A sends the component of the audio signal having the frequency f1 to the decision unit 343. When the level of the component of the audio signal having the frequency f2 exceeds the threshold, the level detector 342B sends the component of the audio signal having the frequency f2 to the decision unit 343. When the level of the component of the audio signal having the frequency f3 exceeds the threshold, the level detector 342C sends the component of the audio signal having the frequency f3 to the decision unit 343.

As shown in FIG. 5A, when the decision unit 343 receives the inputs of the signals from the level detectors 342A and 342B without receiving any input of signal from the level detector 324C, the decision unit 343 notifies the remote control unit 33 that the measurement audio is detected from the audio signal from the microphone 3 a. When the decision unit 343 receives no inputs of signal from the level detectors 342A and 342B or when the decision unit 343 receives an input of signal from only one of the level detectors 342A and 342B, the decision unit 343 does not notify the remote control unit 33.

The reason for this is as follows. Deciding the detection of the measurement audio only when both the frequency components f1 and f2 of the measurement audio are detected would effectively prevent false detections that the noise or music spoken by the speaker device 2 is erroneously detected as the measurement audio.

As shown in FIG. 5B, when the decision unit 343 receives the inputs of the signals from the level detectors 342A and 342B with further receiving any input of signal from the level detector 324C, the decision unit 343 does not notify the remote control unit 33. The reason for this is as follows. When the frequency components f1 and f2 exceed the threshold and the frequency component f3 also exceeds the threshold, it is highly possible that the audio as input into the microphone 3a is noise or music but not the measurement audio.

In general, noises such as environmental sounds and music have wide frequency spectrums as shown in FIG. 5B. When the level of the frequency component f3 between the frequencies f1 and f2 is greater than the threshold, no notification is made to the remote control unit 33 as the audio as input into the microphone 3a is other sounds such as noise or music than the measurement audio. This can accurately prevent the false detection of the measurement audio.

It is also possible to decide the detection of the measurement audio with reference only to the frequency components f1 and f2 without referring the frequency component f3. It is preferable for improving the accuracy of the detection of the measurement audio to refer the frequency component f3 in addition to the reference to the frequency components f1 and f2.

FIGS. 6 and 7 are flow charts processes including the position detecting process to be executed by the audio system 1 shown in FIGS. 3 and 4. The position detecting process includes a position detecting process in the remote control side which is to be executed by the remote controller 3 and another position detecting process in the speaker side which is to be executed by the speaker device 2.

The remote control unit 33 decides periodically at a constant time interval whether or not the start button 321a is pushed down. The system is placed in the stand-by state until the remote control unit 33 decides that the start button 321a is pushed down (S1). When pushing down the start button 321a is decided (YES:S1), the remote control unit 33 makes the infrared emitter 31 transmit the start command signal that instructs the execution of the position detecting process in the remote control side (S2).

In the speaker device 2, the controller 25 periodically decides whether or not the start command signal is entered. The speaker device 2 is placed in stand-by state until the controller 25 decides that the start command signal is entered (S3). When the entry of the start command is decided (YES: S3), the controller 25 instructs the signal processor 22 to generate the measurement audio signal and to supply it to the speaker unit SP1 and further instructs the timer 261 to start the measurement of time (S4).

In the remote controller 3, the remote control unit 33 periodically decides at a constant time interval whether or not the measurement audio is detected after the step S2. The remote controller 3 is placed in stand-by state until the remote control unit 33 decides that the measurement audio is detected (S5). The decision on the detection of the audio signal is made depending upon the notification of the detection of the measurement audio signal from the signal detector 34. When the detection of the measurement audio is decided (YES: S5), the remote control unit 33 instructs the infrared emitter 31 to transmit the notification signal that is to notify the receipt (S6).

In the speaker device 2, the controller 25 periodically decides at a constant time period whether or not the notification signal is entered. The speaker device 2 is placed in stand-by state until the controller 25 decides that the notification signal is entered (S7). When the detection of the measurement audio is decided (YES: S7), the controller 25 instructs the timer 261 to finish the measurement of time and then stores the measured time period t1 in the time storing unit 262 (S8).

The controller 25 instructs the signal processor 22 to generate the measurement audio signal and input the signal into the speaker unit SPn as well as instructs the timer 261 to start measurement of time (S9). In the remote controller 3, the remote control unit 33 periodically decides at a constant time period whether or not the notification signal is entered after the step S6. The remote controller 3 is placed in stand-by state until the remote control unit 33 decides that the measurement audio is entered (S10). The decision on the detection of the measurement audio is made depending upon the notification of the detection of the measurement audio signal from the signal detector 34.

With reference to FIG. 7, when the detection of the measurement audio is decided (YES: S10), the remote control unit 33 instructs the infrared emitter 31 to transmit the notification signal that notifies the detection thereof (S11). The remote control unit 33 returns the position detecting processes in the remote control side to the step S1.

In the speaker device 2, the controller 25 periodically decides at a constant time period whether or not the notification signal is entered after the step S9. The speaker device 2 is placed in stand-by state until the controller 25 decides that the notification signal is entered (S12). When the detection of the measurement audio is decided (YES: S12), the controller 25 instructs the timer 261 to finish the measurement of time and then stores the measured time period t2 in the time storing unit 262 (S 13).

The controller 25 instructs the operation unit 263 to calculate the listening position. For example, the operation unit 263 reads the time periods t1 and t2 out of the time storing unit 262. The operation unit 263 calculates the coordinates of the listening position in accordance with the above-described equations (1) - (5) by using the time periods t1 and t2 (S14). The controller 25 gives the signal processor 22 the delay control value such that the audio beam is directed toward the listening position designated by the coordinates of the listening position (S 15).

The controller 25 instructs the signal processor 22 to generate an audio signal as an ending sound and to enter it into the speaker units SP1 - SPn. The signal processor 22 executes the processes in accordance with the instructions, thereby calling the ending sound (S16). Then the controller 25 returns the position detecting processes to the step S3.

As described above, in accordance with the position detecting process of the present embodiment, the measurement audio signal created by the add-synthesis of the audio signal having the frequency f1 and the audio signal having the frequency f2 is input into the speaker units SP 1, SPn. When the levels of the frequency components f1 and f2 of the audio signal as input through the microphone 3 a are greater than the threshold, then the decision unit 343 detects those components as the measurement audios.

Using the measurement audio signals including the two audio signals makes it easy that the band-pass filter 341 separates the measurement audio signal and the noises, wherein the remote controller 3 is used. Using the measurement audio signal including the two or more frequency components f1 and f2 makes it easer that the position detector 34 discriminates the measurement audio and the noises as compared to when using the measurement audio signal having the single frequency component. This can effectively prevent that the signal detector 34 erroneously detects the noises such as environmental sounds or music as the measurement audio. The frequencies f1 and f2 may be harmony to each other.

In accordance with the present embodiment, when the level of the component of the frequency f3 between the frequencies f1 and f2 is greater than the predetermined level and the levels of the frequency components f1 and f2 are greater than the predetermined level, those components are not detected as the measurement audio.

As described above, the noises such as the environmental sounds and music may generally have wide frequency spectrum. When not only the levels of the frequency components f1 and f2 but also the level of the frequency component f3 is greater than the predetermined level, it is highly possible that those components are noises or music but not the measurement audio. Thus, when the level of the frequency component f3 is greater than the predetermined level, those components are not detected as the measurement audio. This can further effectively prevent the false detection of the noises or music as the measurement audio.

(Second Embodiment)

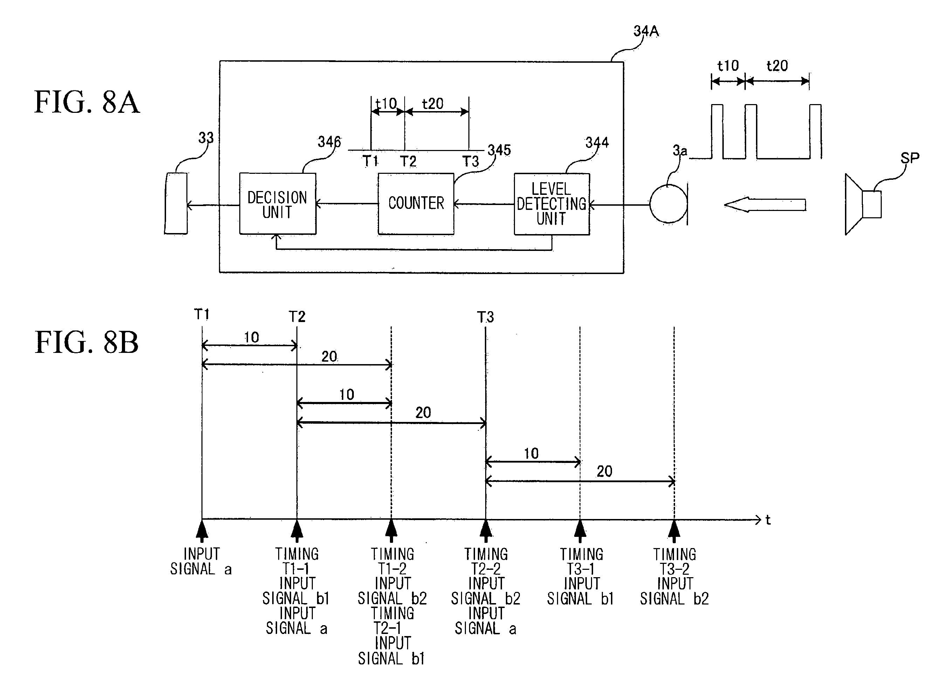

The second embodiment of the present invention will be described with reference to FIGS. 8A and 8B. In the first embodiment, the signal created by the add-synthesis of the audio signal having the frequency f1 and the audio signal having the frequency f2 is used as the measurement audio signal, thereby preventing the false detection of the measurement audio. In accordance with the second embodiment contrasting to the first embodiment, a pulse train of specific pattern is used as the measurement audio signal to prevent the false detection of the measurement audio.

In accordance with the present embodiment, the specific pattern consists of three pulses. There is a time interval t10 between outputs of the first and second pulses. There is a time interval t20 between outputs of the second and third pulses. The number of pulses is not limited to three. Two pulse or larger number pulses than three are available. Increasing the number of pulses improves the effects of preventing the false detection, while increasing the time that is elapsed to detect the measurement audio.

The second embodiment is different from the first embodiment in the measurement audio signal and in the remote control 3 having a signal detector 34A instead of the above-described signal detector 34. Other configurations of the speaker device 2 and the remote controller 3 of the second embodiment are the same as those of the first embodiment. Only the configurations of the signal detector 34A will be described, while descriptions of the other configurations will be omitted.

FIG. 8A is a block diagram illustrating the signal detector 34A in accordance with the second embodiment. The signal detector 34A includes a level detector 344, a counter 345 and a decision unit 346. The level detector 344 receives input of an audio signal through the microphone 3 a. The level detector 344 has a threshold that has previously been set. The level detector 344 inputs a signal "a" into the counter 344 and the decision unit 346 when the level of the input signal exceeds the threshold.

When the measurement audio is input through the microphone 3a, the signal "a" is input into the counter 345and the decision unit 346 at a time T1 in FIG. 8B when the input of the audio corresponding to the first pulse is started, at a time T2 in FIG. 8B when the input of the audio corresponding to the second pulse is started, and at a time T3 in FIG. 8B when the input of the audio corresponding to the third pulse is started.

Upon input of the signal "a", the counter 345 starts counting time and inputs the signal "b" into the decision unit 346 when the time t10 is elapsed and when the time t20 is elapsed.

FIG. 8B is a diagram illustrating an example of the input timings of signals "a" and "b" into the decision unit 346. The lateral axis represents the time.

The decision unit 346 receives the input of the signal "a" from the level detector 344 at a timing T1, a timing T2 and a timing T3. In this case, the signal "b" is input into the decision unit 346 when the time t10 is lapsed from the timing T1 (at the timing T1- 1) and when the time t20 is lapsed from the timing T1 (at the timing T1- 2). Also, the signal "b" is input into the decision unit 346 when the time t10 is lapsed from the timing T2 (at the timing T2- 1) and when the time t20 is lapsed from the timing T2 (at the timing T2- 2). Also, the signal "b" is input into the decision unit 346 when the time t10 is lapsed from the timing T3 (at the timing T3- 1) and when the time t20 is lapsed from the timing T3 (at the timing T3- 2). For example, the signal b1 is input when the time t10 is elapsed. The signal b2 is input when the time t20 is elapsed.

The decision unit 346 decides whether receiving the input of the signal from the level detector 344, upon receipt of the input of the signal "b" from the counter 345. The signal b1 is input at the timing T1-1 which corresponds to the timing T2, thereby input of the signal "a". If the signal "a" is input at the time the signal b1 is input, a decision is made that the audio corresponding to the first pulse is input at the timing T1.

The signals b2 and b1 are input at the timings T1-1, T2-1. At those timings, any measurement audio is not input and no input of the signal "a" is made. Thus, a decision is made that any audio corresponding to the second pulse is not input at the timing T1, and that any audio corresponding to the first pulse is not input at the timing T2.

A signal "b2" is input at the timing T2-2 which corresponds to the timing T3, and the signal "a" is input. Thus, a decision is made that any audio corresponding to the second pulse is not input at the timing T2, and that any audio corresponding to the third pulse is not input at the timing T3.

None of inputs of the noises and the signal "a" are caused at the timings T3-1, T3-2.

When the decision unit 346 decides the audios corresponding to the first to third pulses are sequentially input, the decision unit 346 notifies the remote control unit 33 that the measurement audio is detected. This can detect the measurement audio even when the audio of the pulses of septic pattern together with noises are input through the microphone 3a into the signal detector 34A.

As described above, in accordance with the second embodiment, the measurement audio signal of the pulse train of specific pattern is input into the speaker units SP1, SPn. When the audio signal exceeding the threshold to match the specific pattern is input into the signal detector 34A, the input of the measurement audio is decided. Using the measurement audio signal of the pulse train having specific pattern makes it easy that the signal detector 34A distinguishes the noises and the measurement audio. Similarly to the first embodiment, the remote controller 3 can be prevented from false detection of the noise or music as the measurement audio.

(Third Embodiment)

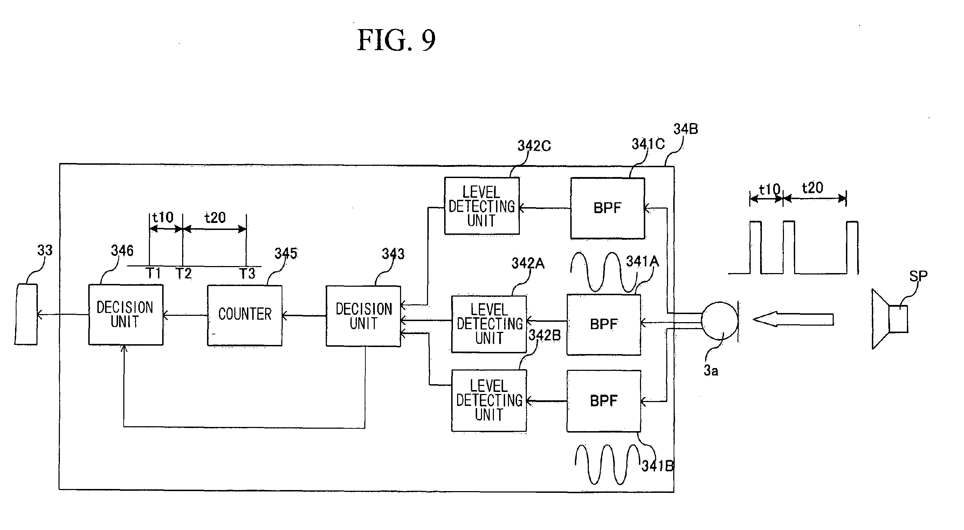

The third embodiment of the present invention will be described with reference to FIG. 9. As described above, in the first embodiment, the signal created by the add-synthesis of the audio signal having the frequency f1 and the audio signal having the frequency f2 is used as the measurement audio signal. In accordance with the second embodiment, the pulse train of specific pattern is used as the measurement audio signal. In accordance with the third embodiment contrasting thereto, used as the measurement signal is a signal consisting of a pulse train that is created by add-synthesis of the audio signal having the frequency f1 and the audio signal having the frequency f2, wherein the pulse train has a specific pattern.

The third embodiment is different from the first embodiment in that the in the measurement audio signal and in the remote control 3 having a signal detector 34B instead of the above-described signal detector 34. Other configurations of the speaker device 2 and the remote controller 3 of the third embodiment are the same as those of the first embodiment. Only the configurations of the signal detector 34B will be described, while descriptions of the other configurations will be omitted.

FIG. 9 is a block diagram illustrating the signal detector 34B in accordance with the third embodiment. For describing the signal detector 34B, the same elements as those of the signal detectors 34, 34A are allocated with the same reference numbers and the duplicate descriptions will be omitted. The signal detector 34B includes band-pass filters 341 (341A- 341C), level detectors 342 (342A- 342C), a decision unit 343, a counter 345, and a decision unit 346.

The band-pass filters 341A - 341C pass only the frequency components f1, f2 and f3 of the audio signals as input through the microphone 3 a, similarly to the first embodiment. The frequency components f1, f2 and f3 of the audio signals are then input into the corresponding level detectors 342 (342A - 342C). The level detectors 342 (342A - 342C each input the audio signal into the decision unit 343 when the level of the audio signal exceeds the threshold.

If the decision unit 343 receives inputs of the signals from the level detectors 342A and 342B without receiving any input of signal from the level detector 342C, the decision unit 343 inputs the signals into the counter 345 and the decision unit 346.

The counter 345 starts the measurement of time upon input of the signal similarly to the second embodiment. The counter 345 inputs the signal into the decision unit 346 when the time t1 0 is elapsed and when the time t20 is elapsed. Similarly to the second embodiment, when the decision unit 346 sequentially receives the three times of input of the signal and also receives the inputs of the signals from the level detectors 342A, 342B, the decision unit 346 notifies the remote control unit 33 that then measurement audio is detected.

As described above, in accordance with the third embodiment, as the measurement signal, the signal consisting of a pulse train that is created by add-synthesis of the audio signal having the frequency f1 and the audio signal having the frequency f2 is input into the speaker units SP1, SPn, wherein the pulse train has a specific pattern. When the audio signal exceeding the threshold to match the specific pattern at the frequencies f1 and f2 is input into the signal detector 34A, the detection of the measurement audio is decided. When the input signal has the levels exceeding the predetermined levels at the frequency components f1 and f2, the measurement audio is detected. The effect of preventing the false detection of the measurement audio is further improved as compared to the first and second embodiments.

In accordance with this embodiment, each pulse included in the pulse train has the same frequency components f1 and f2. It is possible that each pulse included the pulse train have different frequency components from other pulse included in the pulse train. The pattern of the pulse train can be modified so that the measurement audio is simple music. The listening position can be measured by using the measurement audio which can provide good feeling.

The following modifications to the present embodiment are available.

In accordance with the present embodiment, the start button 321a is pushed down, the coordinates of the position of the remote controller 3 are detected. There should be no limitation to this configuration. For example, position-detection of the remote controller 3 can be made periodically during a time period after the start button 321 a is once pushed down until the manipulation button 321 is pushed down to finish the position detection. In this time period, the detection of the listening position follows the movement of a listener with the remote controller 3, while changing the delay control value.

In accordance with the embodiment, the measurement audio signal is input into the speaker units SP1, SPn. There should be no limitation to this configuration. It is also possible to input the measurement audio signal into the other speaker units SP.

It is also possible that the microphone 3a is not integrated in the remote controller 3. The microphone 3a is connected to the remote controller 3, and the microphone 3a is positioned at the listening position. The remote controller 3 is not essential. Any other terminal device such as a general-purpose device which communicates to the speaker device 2 and which receives the signal from the microphone 3 a.

The speaker device 2 has an integration of speaker array 2a. This configuration is not essential. Instead of the speaker device 2, a speaker system can be used which includes the speaker array 2a and a function unit which is separate from the speaker array 2a, wherein the function unit performs the signal processing which adjusts the delay time and the output level of the audio signal. This function unit can be provided in the other audio device even the function unit is integrated in the speaker device of the other audio device.

The speaker array 2a is constituted by a linear-alignment of the speaker units SP1 - SPn which alignment is not essential. The speaker units SP can be aligned in matrix, honeycomb or circle.

The speaker device 2 can have a plurality of ordinal speakers instead of the speaker array 2a. The measurement audio signal is input into the plurality of speakers, and the remote controller 3 is used to detect the measurement audio. In this case, the present invention is applicable.

While preferred embodiments of the invention have been described and illustrated above, the position detecting device and the position detecting method of the present invention should not be limited to the above-described embodiments. Accordingly, the invention is not to be considered as being limited by the foregoing description, and is only limited by the scope of the appended claims.

Industrial Applicability

The present invention is useful to the position detecting system which effectively prevents the false detection of the measurement audio. The present invention is also useful to the speaker device and the terminal device which are used in the position detecting system which effectively prevents the false detection of the measurement audio.

**Claims**

**1.** A position detecting system comprising:

   an audio device; and
   a terminal device that performs a function to communicate with the audio device, the terminal device receiving an input of an audio signal from a microphone, the microphone collecting audios that have been output from the audio device, and
   wherein the audio device comprises:

      an input unit that inputs a measurement audio signal that includes two or more audio signals having different frequencies into first and second speakers sequentially;

a signal receiver that receives, from the terminal device, a notification signal notifying that the microphone collected the audio of the measurement audio signal;

a timer that times a first time period and a second time period, the first time period being defined between after the audio of the measurement audio signal is output from the first speaker and until the notification signal of the measurement audio signal is received by the signal receiving unit, and the second time period being defined between after the audio of the measurement audio signal is output from the second speaker and until the notification signal of the measurement audio signal is received by the signal receiving unit; and

an operating unit that operates the position of the microphone by using the first and second time periods that have been timed by the timer unit, and

wherein the terminal device comprises:

a signal detector that detects each frequency component of the measurement audio signal as a component of the measurement audio signal when the audio signal having a higher level than a predetermined level is input through the microphone; and

a signal transmitter that transmits the notification signal to the audio device when the signal detector detects the measurement audio signal.

2. The position detecting system according to claim 1, wherein the input unit inputs, into the speakers, a signal of harmony as the measurement audio signal.

3. An audio device comprising:

an input unit that inputs a measurement audio signal that includes two or more audio signals having different frequencies into first and second speakers sequentially;

a signal receiver that receives a communication signal from a terminal device having a microphone, the signal receiver receiving a notification signal notifying that the microphone collected the audio of the measurement audio signal;

a timer that times a first time period and a second time period, the first time period being defined between after the audio of the measurement audio signal is output from the first speaker and until the notification signal of the measurement audio signal is received by the signal receiving unit, and the second time period being defined between after the audio of the measurement audio signal is output from the second speaker and until the notification signal of the measurement audio signal is received by the signal receiving unit; and

a position measuring unit that measures the position of the microphone by using the first and second time periods that have been timed by the timer unit.

4. A terminal device performing a function to communicate with an audio device that inputs an audio signal into first and second speakers,

an audio signal input unit that receives an input of an audio signal through a microphone;

a signal detector that detects each frequency component of the measurement audio signal as a component of the measurement audio signal when the audio signal having a higher level than a predetermined level is input through the microphone, the each frequency component of the measurement audio signal corresponding to a measurement audio signal that includes two or more audio signals having different frequencies, which has been output from the speakers; and

a signal transmitter that transmits the notification signal to the audio device when the signal detector detects the measurement audio signal.

5. A position detecting system comprising:

an audio device; and

a terminal device that performs a function to communicate with the audio device, the terminal device receiving an input of an audio signal from a microphone, the microphone collecting audios that have been output from the audio device, and

wherein the audio device comprises:

an input unit that inputs a measurement audio signal that includes a pulse train of a specific pattern into first and second speakers sequentially;

a signal receiver that receives, from the terminal device, a notification signal notifying that the microphone collected the audio of the measurement audio signal;

a timer that times a first time period and a second time period, the first time period being defined between after the audio of the measurement audio signal is output from the first speaker and until the notification signal of the measurement audio signal is received by the signal receiving unit, and the second time period being defined between after the audio of the measurement audio signal is output from the second speaker and until the notification signal of the measurement audio signal is received by the signal receiving unit; and

an operating unit that operates the position of the microphone by using the first and second time periods that have been timed by the timer unit, and

wherein the terminal device comprises:

a signal detector that detects an audio signal as a component of the measurement audio signal when the audio signal having a higher level than a predetermined level to match the specific pattern is input through the microphone; and

a signal transmitter that transmits the notification signal to the audio device when the signal detector detects the measurement audio signal.

6. The position detecting system according to claim 5, wherein the input unit inputs the measurement audio signal that includes two or more audio signals having different frequencies into first and second speakers sequentially, and wherein the signal detector detects each frequency component of the measurement audio signal as a component of the measurement audio signal when the audio signal input unit receives the input of the audio signal having the higher level than the predetermined level to match the specific pattern.

7. An audio device comprising:

an input unit that inputs a measurement audio signal that includes a pulse train of a specific pattern into first and second speakers sequentially;

a signal receiver that receives a communication signal from a terminal device having a microphone, the signal receiver receiving a notification signal notifying that the microphone collected the audio of the measurement audio signal;

a timer that times a first time period and a second time period, the first time period being defined between after the audio of the measurement audio signal is output from the first speaker and until the notification signal of the measurement audio signal is received by the signal receiving unit, and the second time period being defined between after the audio of the measurement audio signal is output from the second speaker and until the notification signal of the measurement audio signal is received by the signal receiving unit; and

a position measuring unit that measures the position of the microphone by using the first and second time periods that have been timed by the timer unit.

8. A terminal device performing a function to communicate with an audio device that inputs an audio signal into first and second speakers, the terminal device comprising:

an audio signal input unit that receives an input of an audio signal through a microphone;

a signal detector that detects an audio signal as a component of the measurement audio signal when the audio signal input unit receives an input of the audio signal having a higher level than a predetermined level, the audio signal having the same pattern as a specific pattern of a pulse train that has been output from a speaker as the measurement audio signal; and

a signal transmitter that transmits the notification signal to the audio device when the signal detector detects the measurement audio signal.

# FIG. 1

# FIG. 2

# FIG. 3

EP 1 962 558 A1

# FIG. 4

EP 1 962 558 A1

## FIG. 5A

## FIG. 5B

# FIG. 6

REMOTE CONTROLLER
(PROCESS FOR DETECTING POSITION
OF REMOTE CONTROLLER)

SPEAKER
(PROCESS FOR DETECTING
POSITION OF SPEAKER)

( PROCESS FOR DETECTING POSITION )

(A) →

(A) ← N — S1
IS
START-BUTTON PUSHED
?

(D)

Y

S2
TRANSMIT
START—COMMAND
SIGNAL

S3
IS
START—COMMAND SIGNAL
RECEIVED?
N

Y

N — S5
IS AUDIO
SIGNAL FOR MEASUREMENT
DETECTED?

S4
INPUT AUDIO SIGNAL FOR
MEASUREMENT INTO SPEAKER
UNIT SP1 AND START TIMING

Y

S6
TRANSMIT NOTICE SIGNAL

S7
IS
NOTICE SIGNAL RECEIVED
?
N

Y

S8
END TIMING AND
STORE TIME t1

N — S10
IS AUDIO
SIGNAL FOR MEASUREMENT
DETECTED?

S9
INPUT AUDIO SIGNAL FOR
MEASUREMENT INTO
SPEAKER UNIT SPn
AND START TIMING

Y

(B)

(C)

# FIG. 7

B

S11

TRANSMIT
RECEIVE—NOTICE—COMMAND

A

C

S12

IS NOTICE
SIGNAL RECEIVED
?

N

Y

S13

END TIMING AND
STORE TIME t2

S14

OPERATE COORDINATES
OF HEARING POSITION

S15

SET DELAY CONTROL VALUE

S16

PRODUCE END—SOUND

D

EP 1 962 558 A1

FIG. 8A

34A

33

346 DECISION UNIT

345 COUNTER

344 LEVEL DETECTING UNIT

t10 t20
T1 T2 T3

3a

t10 t20

SP

FIG. 8B

T1 T2 T3

10
20
10
20
10
20

t

INPUT SIGNAL a

TIMING T1-1 INPUT SIGNAL b1 INPUT SIGNAL a

TIMING T1-2 INPUT SIGNAL b2 TIMING T2-1 INPUT SIGNAL b1

TIMING T2-2 INPUT SIGNAL b2 INPUT SIGNAL a

TIMING T3-1 INPUT SIGNAL b1

TIMING T3-2 INPUT SIGNAL b2

# FIG. 9

EP 1 962 558 A1

| **INTERNATIONAL SEARCH REPORT** | International application No. |
| --- | --- |
| | PCT/JP2006/323783 |

**A. CLASSIFICATION OF SUBJECT MATTER**
*H04S5/02*(2006.01)i

According to International Patent Classification (IPC) or to both national classification and IPC

**B. FIELDS SEARCHED**

Minimum documentation searched (classification system followed by classification symbols)
H04S5/02, G01S15/00-15/96

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 1-276900 A (Hitachi, Ltd.), 07 November, 1989 (07.11.89), Page 2, lower right column, lines 1 to 18 (Family: none) | 1-8 |
| Y | JP 2003-195859 A (Yamaha Corp.), 09 July, 2003 (09.07.03), Par. Nos. [0029] to [0032] & US 2003/0121403 A1 | 1-8 |
| Y A | JP 2000-214258 A (Matsushita Electric Works, Ltd.), 04 August, 2000 (04.08.00), Par. No. [0015] (Family: none) | 5-8 1-4 |

☒ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 February, 2007 (23.02.07) | 06 March, 2007 (06.03.07) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/323783

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | Microfilm of the specification and drawings annexed to the request of Japanese Utility Model Application No. 114306/1988(Laid-open No. 35085/1990)<br>(Mitsubishi Motors Corp.),<br>06 March, 1990 (06.03.90),<br>Description, page 4, line 15 to page 5, line 2<br>(Family: none) | 5-8<br>1-4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005349090 A
- JP 4370000 A